# DEMANDE DE BREVET EUROPEEN

(11) **EP 1 512 861 A1**
(43) Date de publication de la demande: **09.03.2005**
(21) Numéro de dépôt: 04292062.9
(22) Date de dépôt: 18.08.2004
(51) Int. Cl.: F02D 41/40, F02D 41/14

(54) **Système de supervision du recalage d'au moins un paramètre de contrôle du fonctionnement d'un moteur**

(30) Priorité: 03.09.2003 FR 0310437
(71) Demandeur: Peugeot Citroen Automobiles S.A., 78140 Vélizy Villacoublay (FR); Delphi Technologies, Inc., Troy, MI 48098 (US)
(72) Inventeur: Vermonet, Claire, 75116 Paris (FR); Meissonnier, Guillaume, 41190 Landes le Gaulois (FR); Lorret, Cédric, 75011 Paris (FR)
(74) Mandataire: Habasque, Etienne Joel Jean-François

(57) **Abrégé**

L'invention concerne un système de supervision du recalage d'au moins un paramètre de contrôle du fonctionnement d'un moteur Diesel (10 ;51) de véhicule automobile, comportant des moyens (22 ;60) de recalage du au moins un paramètre présentant au moins un état de recalage actif et un état de recalage suspendu. Ce système comprend des moyens (14) d'acquisition du point de fonctionnement du moteur, des moyens (28 ;102 ,104 ,106 ,108) de comparaison du point de fonctionnement du moteur à des plages prédéterminées de fonctionnement du moteur, et des moyens (24 ;90) de commande de l'état de fonctionnement des moyens (22 ;60) de recalage pour commander la transition de l'état de recalage actif à l'état de recalage suspendu lorsque le point de fonctionnement du moteur est compris dans une première plage et commander au moins une fois la transition de l'état de recalage suspendu à l'état de recalage actif lorsque le point de fonctionnement du moteur est compris dans une seconde plage.

## Description

La présente invention concerne un système de supervision du recalage d'au moins un paramètre de contrôle du fonctionnement d'un moteur pour véhicule automobile.

Plus particulièrement, la présente invention concerne la supervision du recalage de la quantité de carburant injectée dans un cylindre lors d'une l'injection pilote pour un moteur Diesel du type comportant des moyens à rampe commune d'alimentation en carburant du moteur par injections multiples de carburant dans chaque cylindre de celui-ci, adaptés pour déclencher une alimentation en carburant de chaque cylindre selon au moins une injection pilote et une injection principale de carburant.

De manière classique, la qualité du fonctionnement d'un moteur de véhicule automobile dépend de plusieurs paramètres de contrôle du fonctionnement de ce moteur dont on commande la valeur, afin d'obtenir un fonctionnement satisfaisant de celui-ci. Par exemple, le fonctionnement d'un moteur Diesel à rampe commune d'alimentation est commandé selon une pluralité de paramètres, par exemple l'instant d'injection de la quantité ou les quantités de carburant injectées dans les cylindres, le ratio air/gaz d'échappement recyclé, la quantité de carburant injectée dans un cylindre lors de l'injection pilote, etc.

Il est possible de déterminer la valeur de ces paramètres de contrôle du fonctionnement du moteur lors de la sortie d'usine par exemple. Cependant dans un tel cas, ces valeurs sont déterminées en fonction des caractéristiques mécaniques et/ou thermodynamiques initiales du moteur. Le défaut de ce type de systèmes de commande du fonctionnement du moteur, dont les caractéristiques sont déterminées une unique fois au début du fonctionnement du moteur, est d'une part une dispersion en sortie d'usine des caractéristiques des moteurs d'un même parc de véhicules automobiles, et d'autre part une dérive des caractéristiques du moteur au cours de sa vie.

Ainsi, il est possible que les valeurs des paramètres de contrôle puissent être initialement insuffisamment bien définies pour un fonctionnement satisfaisant du moteur, si la détermination de ces valeurs n'est pas effectuée véhicule par véhicule. En outre, la somme des dérives des caractéristiques du moteur peut induire que les valeurs des paramètres de contrôle ne sont plus adaptées, ce qui a pour conséquence une dégradation du fonctionnement du moteur et en particulier une augmentation des émissions de polluants.

C'est pourquoi, il est nécessaire de définir un système de contrôle du fonctionnement du moteur adapté pour chaque véhicule particulier qui soit capable, sur la base de mesures des caractéristiques de fonctionnement du moteur, de définir les meilleures valeurs pour ces paramètres. De plus, la détermination de ces valeurs doit être effectuée régulièrement pour tenir compte des dérives dans le temps des caractéristiques du moteur, c'est-à-dire que la valeur des paramètres de contrôle du fonctionnement du moteur doit être recalée régulièrement afin d'obtenir un fonctionnement satisfaisant du moteur tout au long de sa vie.

Toutefois, du fait des caractéristiques du fonctionnement du moteur, par exemple ses non-linéarités de fonctionnement, il est très difficile de calculer une valeur pour un paramètre de contrôle du fonctionnement du moteur qui soit valable pour l'ensemble de la plage de fonctionnement du moteur.

C'est pourquoi, de manière typique, la plage de fonctionnement du moteur est échantillonnée et une valeur du paramètre de contrôle du fonctionnement du moteur est calculée pour chaque point d'échantillonnage de la plage de fonctionnement, c'est-à-dire que la valeur du paramètre est recalée pour un ensemble de points dits de recalage.

Or, toujours du fait de la complexité du fonctionnement du moteur, le calcul d'une valeur satisfaisante du paramètre pour un point de recalage peut requérir la mise en oeuvre d'algorithmes de détermination qui nécessitent un certain temps, ou un certain nombre de cycles de combustion, ou autres, pour leur exécution. Ainsi, si le point de fonctionnement du moteur s'éloigne de façon sensible du point de recalage sélectionné pour le recalage lors de l'exécution de l'algorithme, la valeur finalement obtenue pour le paramètre peut être non satisfaisante, voire inacceptable pour le fonctionnement du moteur.

Par ailleurs, il peut être nécessaire d'interrompre le recalage si un dysfonctionnement du moteur apparaît et qu'il est alors nécessaire de commander la moteur dans un mode de fonctionnement dégradé.

La présente invention a pour but de résoudre les problèmes susmentionnés, en s'assurant notamment, non seulement de la pertinence du recalage, mais également du bon déroulement du recalage, c'est-à-dire que l'exécution de la détermination de la valeur du paramètre de contrôle du fonctionnement du moteur doit s'effectuer au moins dans une plage de fonctionnement prédéterminée autour du point de recalage sélectionné.

A cet effet, l'invention a pour objet un système de supervision du recalage d'au moins un paramètre de contrôle du fonctionnement d'un moteur de véhicule automobile, du type comportant des moyens de recalage dudit au moins un paramètre de contrôle du fonctionnement du moteur pour un moins un point de recalage et des moyens de déclenchement du recalage dudit au moins un paramètre de contrôle du fonctionnement du moteur, caractérisé en ce que les moyens de recalage présentent au moins deux états de fonctionnement, à savoir un état de recalage actif et un état de recalage suspendu, et en ce que le système comprend :
- des moyens d'acquisition d'informations relatives au point de fonctionnement du moteur;
- des moyens de comparaison du point de fonctionnement du moteur à des plages prédéterminées de fonctionnement du moteur associées aux transitions entre les états de recalage actif et suspendu des moyens de recalage;
- des moyens de commande de l'état de fonctionnement des moyens de recalage adaptés pour :
   a) commander la transition des moyens de recalage de l'état de recalage actif à l'état de recalage suspendu lorsque le point de fonctionnement du moteur est compris dans la plage prédéterminée de fonctionnement associée à la transition de l'état de recalage actif à l'état de recalage suspendu, afin de suspendre le recalage du au moins un paramètre de contrôle du fonctionnement du moteur;
   b) commander au moins une fois la transition de l'état de recalage suspendu à l'état de recalage actif lorsque le point de fonctionnement du moteur est compris dans la plage prédéterminée de fonctionnement associée à la transition de l'état de recalage suspendu à l'état de recalage actif, afin de poursuivre le recalage du au moins un paramètre de contrôle du fonctionnement du moteur.

Selon une autre caractéristique, le système est caractérisé en ce que les moyens de recalage présentent au moins un troisième état de fonctionnement à savoir un état de recalage invalide et en ce que :
- les moyens de comparaison sont adaptés pour comparer le point de fonctionnement du moteur à une plage prédéterminée de fonctionnement du moteur associée à la transition de l'état de recalage invalide à l'état de recalage actif ;
- les moyens de commande de l'état de fonctionnement des moyens de recalage sont adaptés pour commander la transition des moyens de recalage de l'état de recalage invalide à l'état de recalage actif lorsque le point de fonctionnement du moteur appartient à la plage prédéterminée de fonctionnement du moteur associée à la transition de l'état de recalage invalide à l'état de recalage actif, afin de débuter le recalage du au moins un paramètre de contrôle du fonctionnement du moteur.

Selon une autre caractéristique, le système est caractérisé en ce qu'il comprend des moyens d'acquisition d'une valeur caractéristique d'une durée de suspension des moyens de recalage et en ce que les moyens de commande de l'état de fonctionnement des moyens de recalage sont adaptés pour commander la transition de l'état de recalage suspendu à l'état de recalage invalide si la valeur caractéristique de la durée de suspension est supérieure ou égale à un seuil de durée prédéterminé.

Selon une autre caractéristique, le système est caractérisé en ce que les moyens d'acquisition de la valeur caractéristique de la durée de suspension comprennent une horloge adaptée pour mesurer le temps écoulé dans l'état de recalage suspendu par les moyens de recalage et en ce que la durée de suspension des moyens de recalage est le temps passé par les moyens de recalage dans l'état de recalage suspendu.

Selon une autre caractéristique, le système est caractérisé en ce qu'il comprend des moyens de détermination des plages prédéterminées de fonctionnement du moteur adaptés pour déterminer, successivement au déclenchement du recalage du au moins un paramètre de contrôle du fonctionnement du moteur par les moyens de déclenchement du recalage, les plages prédéterminées de fonctionnement en fonction du au moins un point de recalage et de la valeur initiale du point de fonctionnement du moteur.

Selon une autre caractéristique, le système est caractérisé en ce qu'il comprend des moyens de diagnostic des dysfonctionnements du moteur raccordés aux moyens de commande de l'état de fonctionnement des moyens de recalage, et en ce que les moyens de commande de l'état de fonctionnement des moyens de recalage sont adaptés pour invalider le recalage lorsqu'un dysfonctionnement du moteur est détecté par les moyens de diagnostic.

Selon une autre caractéristique, le système est caractérisé en ce que les moyens de déclenchement du recalage sont en outre adaptés pour mettre en oeuvre une stratégie prédéterminée de gestion prioritaire des recalages des paramètres de contrôle du fonctionnement du moteur.

Selon une autre caractéristique, le système est caractérisé en ce que les moyens de déclenchement sont adaptés pour invalider ou suspendre le recalage en cours d'un paramètre de contrôle du fonctionnement du moteur si le recalage d'un paramètre plus prioritaire est nécessaire.

Selon une autre caractéristique, le système est caractérisé en ce que les moyens de déclenchement sont adaptés pour inhiber le recalage d'un paramètre devant être réalisé si le recalage d'un paramètre plus prioritaire est en cours d'exécution.

Selon une autre caractéristique, le système est caractérisé en ce que le moteur de véhicule automobile est un moteur Diesel du type comportant des moyens à rampe commune d'alimentation en carburant du moteur par injections multiples de carburant dans chaque cylindre de celui-ci, adaptés pour déclencher une alimentation en carburant de chaque cylindre selon au moins une injection pilote et une injection principale de carburant, et en ce que :
- le au moins un paramètre de contrôle du fonctionnement du moteur est la quantité de carburant injectée dans un cylindre lors de l'injection pilote ;
- le au moins un point de recalage est déterminé par des valeurs prédéterminées du régime et de la charge de fonctionnement du moteur, ce au moins un point de recalage étant associé à une plage prédéterminée de valeurs de régime le comprenant;
- le point de fonctionnement est déterminé par les valeurs du régime, de la charge, de la température du liquide de refroidissement et des paramètres d'injection du cylindre.

Selon une autre caractéristique, le système est caractérisé en ce que les moyens de déclenchement du recalage sont adaptés pour déclencher le recalage de la quantité de carburant injectée dans le cylindre lors de l'injection pilote si le nombre de kilomètres parcourus depuis le dernier recalage de la quantité de carburant injectée dans le cylindre lors de l'injection pilote est supérieur à un seuil de kilomètres prédéterminé.

Selon une autre caractéristique, le système est caractérisé en ce qu'il comprend des moyens de détermination des valeurs de la variation du régime et de la charge du fonctionnement du moteur et en ce que les moyens de détermination des plages de fonctionnement du moteur sont adaptés pour déterminer la plage de fonctionnement associée à la transition de l'état de recalage invalide à l'état de recalage actif comme étant l'ensemble des points de fonctionnement tels que les valeurs du régime et de la charge sont comprises dans la plage prédéterminée de valeurs de régime et de charge et que les valeurs de la variation du régime et de la charge sont inférieures respectivement à des seuils de variation prédéterminés et que la température du liquide refroidissement est comprise dans une plage de température prédéterminée.

Selon une autre caractéristique, le système est caractérisé en ce que les moyens de détermination des plages de fonctionnement du moteur sont adaptés pour déterminer :
- la plage de fonctionnement associée à la transition de l'état de recalage suspendu à l'état de recalage actif comme étant l'ensemble des points de fonctionnement tels que les valeurs du régime et de la charge sont comprises dans la plage prédéterminée de valeurs de régime et de charge autour du au moins un point de recalage et que la valeur des paramètres d'injection est comprise dans une plage prédéterminée de valeurs des paramètres d'injection comprenant la valeur initiale des paramètres d'injection correspondant à la valeur des paramètres d'injection au début du recalage.
- la plage de fonctionnement associée à la transition de l'état de recalage actif à l'état de recalage suspendu comme étant l'ensemble des points de fonctionnement tels que les valeurs du régime et de la charge ne sont pas comprises dans la plage prédéterminée de valeurs de régime et de charge autour du au moins un point de recalage et/ou que la valeur des paramètres d'injection n'est pas comprise dans la plage prédéterminée de valeurs de paramètres d'injection.

Selon une autre caractéristique, le système est caractérisé en ce que les moyens d'acquisition de la valeur caractéristique de la durée de suspension comprennent un compteur de cycles de cylindre adapté pour compter le nombre de cycles du cylindre exécutés lorsque les moyens de recalage sont dans l'état de recalage suspendu, et en ce que la durée de suspension des moyens de recalage correspond au nombre de cycles du cylindre exécutés lorsque les moyens de recalage sont dans l'état de recalage suspendu.

Selon une autre caractéristique, le système est caractérisé en ce que les moyens de diagnostic sont adaptés pour déterminer un dysfonctionnement des injecteurs des cylindres du moteur, et/ou un dysfonctionnement d'un capteur de régime adapté pour délivrer les informations relatives au régime de fonctionnement du moteur, et/ou une surchauffe du liquide refroidissement, et/ou un dysfonctionnement de moyens de commande de la pression de carburant dans les moyens d'alimentation.

La présente invention sera mieux comprise à la lecture de la description qui va suivre, donnée uniquement à titre d'exemple et faite en se référant aux dessins annexés, où des références identiques identifient des éléments identiques ou analogues, et dans lesquels :
- la figure 1 représente de façon schématique un système de supervision du recalage d'au moins un paramètre de contrôle du fonctionnement d'un moteur selon l'invention ;
- la figure 2 est un schéma de principe d'un système de contrôle de la quantité de carburant injectée dans les cylindres lors de l'injection pilote dans un moteur Diesel à rampe commune d'alimentation supervisé par un système de supervision selon l'invention ;
- la figure 3 est un schéma détaillé du fonctionnement du système de la figure 2 ; et
- la figure 4 est un diagramme d'état mis en oeuvre par le système de supervision entrant dans la constitution du système de la figure 3 ;.

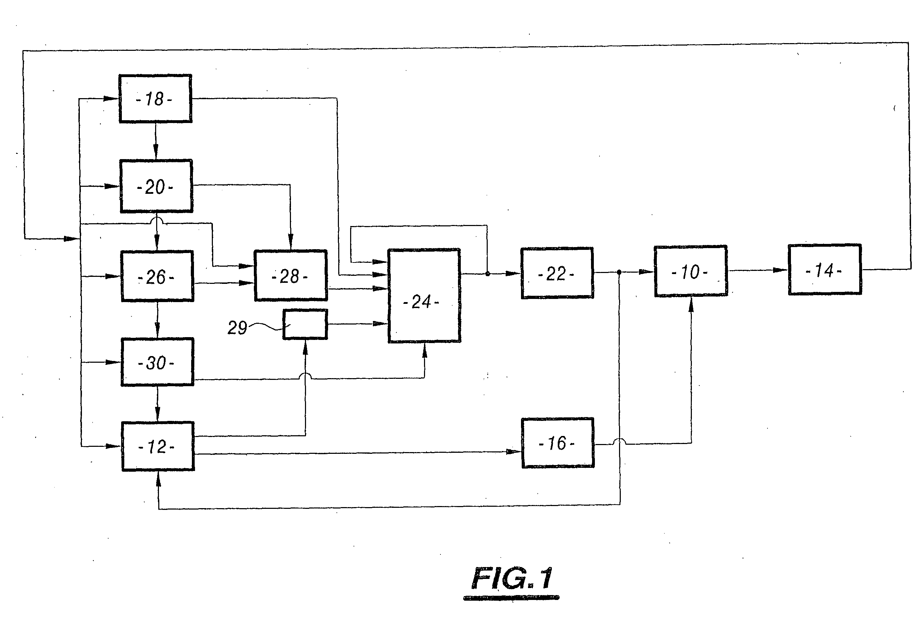

Sur la figure 1, on a représenté de façon schématique un système de supervision du recalage d'au moins un paramètre de contrôle du fonctionnement d'un moteur selon l'invention.

Un moteur pour véhicule automobile du type Diesel ou autres est désigné sous la référence générale 10 et est commandé selon au moins un paramètre de contrôle du fonctionnement. Par exemple pour un moteur Diesel équipé d'un système de recirculation des gaz d'échappement (EGR), il peut s'agir du paramètre consistant en le ratio des quantités air/gaz d'échappement recyclés du système de recirculation des gaz d'échappement et/ou de la quantité de polluants émis. Il peut également s'agir de la quantité de carburant injectée dans un cylindre lors de l'injection pilote pour un moteur du type comportant des moyens d'alimentation en carburant du moteur par injections multiples de carburant dans chaque cylindre de celui-ci, adaptés pour déclencher une alimentation en carburant de chaque cylindre selon au moins une injection pilote et une injection principale de carburant, comme cela sera décrit plus en détail par la suite.

En mode normal de fonctionnement, c'est-à-dire entre deux instants de recalage, les valeurs des paramètres de contrôle du fonctionnement du moteur sont fournies par des moyens 12 de cartographie en fonction de la valeur du point de fonctionnement du moteur. La valeur du point de fonctionnement est délivrée par des moyens 14 d'acquisition d'informations relatives au point de fonctionnement du moteur associés au moteur 10.

De manière classique, la valeur d'un paramètre de contrôle du fonctionnement du moteur est délivrée en fonction de la valeur du régime et de la valeur de la charge du moteur 10 et est délivrée à des moyens 16 de commande du fonctionnement du moteur qui commande le moteur 10 en fonction de celle-ci.

Parallèlement, le système de supervision selon l'invention est adapté pour surveiller les conditions de déclenchement des recalages des paramètres de contrôle. A cet effet, il comprend des moyens 18 de déclenchement du recalage des paramètres de contrôle du fonctionnement du moteur qui sont adaptés pour mettre en oeuvre une stratégie globale prédéterminée de déclenchement des recalages des paramètres de contrôle, ainsi qu'une stratégie de déclenchement du recalage de chaque paramètre de contrôle. La stratégie globale de déclenchement consiste notamment à gérer les priorités entre les différents recalages des paramètres et la stratégie de déclenchement du recalage d'un paramètre particulier consiste quant à elle à déterminer si les conditions nécessaires pour déclencher le recalage du paramètre sont vérifiées.

Par exemple, le recalage d'un paramètre peut être déclenché si un nombre prédéterminé de kilomètres a été parcouru par le véhicule depuis le dernier recalage de ce paramètre et/ou si un temps prédéterminé s'est écoulé depuis le dernier recalage. De manière générale, la stratégie de déclenchement du recalage d'un paramètre est basée sur une information caractéristique de la pertinence de la valeur de paramètre de contrôle en cours d'utilisation.

Les moyens 18 de déclenchement sont adaptés pour mettre en oeuvre la stratégie globale de déclenchement des recalages en hiérarchisant les différents paramètres de contrôle du fonctionnement du moteur. En effet, certains paramètres sont plus importants que d'autres pour le fonctionnement du moteur, de sorte que leur recalage est prioritaire par rapport aux recalages de paramètres d'importance moindre. Ainsi, les moyens 18 de déclenchement sont adaptés pour déclencher prioritairement des recalages de paramètres si les conditions de déclenchement de recalages de plusieurs paramètres sont simultanément vérifiées, mais également pour suspendre ou stopper la détermination de la valeur d'un paramètre en cours d'exécution, si un recalage d'un paramètre plus prioritaire est requis.

Une fois le déclenchement du recalage d'un paramètre de contrôle du fonctionnement du moteur décidé, le recalage du paramètre de fonctionnement consiste à déterminer une valeur de ce paramètre pour chaque point de recalage d'un ensemble de points de recalage, comme cela a été expliqué précédemment.

Le choix du point de recalage est effectué par des moyens 20 de détection de point de recalage en fonction du point de fonctionnement délivré par les moyens 14 d'acquisition. Par exemple si la valeur du paramètre de contrôle est délivrée en fonction du régime et de la charge du moteur 10, un point de recalage est alors défini par des valeurs prédéterminées de régime et de charge. Il est alors possible d'associer à chaque point de recalage une plage prédéterminée de valeurs de régime et de charge le comprenant, par exemple une plage de valeurs centrée sur le point de recalage. Le point de recalage est alors choisi comme étant le point de recalage associé à la première plage de valeurs de régime et de charge atteinte par les valeurs du régime et de la charge du moteur pour lequel le recalage n'a pas encore eu lieu, une fois que toutes les conditions nécessaires à l'exécution du recalage sont remplies.

Un autre mode de réalisation du superviseur selon l'invention consiste à considérer de façon indépendante le recalage des valeurs du paramètre de contrôle du fonctionnement du moteur. Chaque valeur du paramètre pour un point de recalage particulier est alors considérée comme un paramètre de contrôle du fonctionnement du moteur unique. Dans un tel cas, une stratégie particulière de déclenchement est adoptée pour chaque point de recalage. Par exemple, lorsque qu'un nombre prédéterminé de kilomètres a été parcouru par le véhicule depuis le dernier recalage de la valeur du paramètre de contrôle pour le point de recalage et lorsque les moyens 20 de détection de point de recalage déterminent que les valeurs du régime et de la charge sont dans la plage prédéterminée de valeurs de régime et de charge associée au point de recalage particulier, les moyens 20 de détection en informent alors les moyens 18 de déclenchement qui déclenchent en réponse le recalage de la valeur du paramètre de contrôle pour le point de recalage.

Une fois le recalage du paramètre de contrôle du fonctionnement du moteur déclenché, le recalage de ce paramètre pour le point de fonctionnement sélectionné est maintenant expliqué.

Le système de supervision comprend des moyens 22 de recalage adaptés pour mettre en oeuvre un algorithme de détermination de la valeur de recalage du paramètre de contrôle pour le point de recalage sélectionné. Cet algorithme de recalage peut par exemple être basé sur l'optimisation d'un index lié au bruit de combustion comme le ratio des gradients de pression maximum liés à l'injection pilote et à l'injection principale lorsque le recalage consiste à déterminer des valeurs du paramètre de contrôle qui minimisent le bruit de fonctionnement du moteur.

Ces moyens 22 de recalage présentent avantageusement trois états principaux de recalage :
- le premier état est un état de recalage actif. Lorsque les moyens 22 de recalage fonctionnent selon cet état, l'algorithme de recalage pour la détermination de la valeur du paramètre de contrôle est en cours d'exécution ;
- le second état est un état de recalage suspendu. Lorsque les moyens 22 de recalage fonctionnent selon cet état, l'algorithme de recalage pour la détermination de la valeur du paramètre de contrôle est suspendu sans être initialisé. En cas de reprise de l'exécution de l'algorithme à partir de cet état, c'est-à-dire un transition dans l'état de recalage actif, l'exécution de l'algorithme reprend son cours à partir de l'état de l'algorithme avant sa suspension.
- le troisième état est un état de recalage invalide. Cet état correspond à l'état de fonctionnement des moyens 22 de recalage qui n'est ni l'état de recalage actif, ni l'état de recalage suspendu et dans lequel l'algorithme de recalage pour la détermination de la valeur du paramètre de contrôle est initialisé. Cet état peut d'ailleurs présenter des sous-états comme un état d'initialisation, un état d'enregistrement des résultats, etc.

Un avantage non négligeable de l'invention est de commander les moyens 22 de recalage selon au moins ces trois états. En effet, si certaines conditions de fonctionnement du moteur, par exemple si les valeurs du régime et de la charge ne sont plus comprises lors de l'exécution de l'algorithme de recalage dans la plage de valeurs autour du point de recalage sélectionné, il est alors possible de suspendre l'exécution de l'algorithme.

Si l'algorithme a été suspendu et que les conditions de fonctionnement permettent à nouveau l'exécution de celui-ci, alors il est possible de reprendre son exécution à partir de l'état dans lequel il a été suspendu, ce qui permet notamment un gain de temps non négligeable.

En l'absence de l'état de recalage suspendu, il est aisé de constater qu'il reste possible de stopper le recalage, c'est-à-dire imposer un état de fonctionnement des moyens de recalage qui soit l'état de recalage invalide, si des conditions de fonctionnement ne sont pas satisfaites. Le recalage peut alors redevenir actif mais l'exécution de l'algorithme de recalage reprend depuis un état initial de sorte que toutes les informations pertinentes préalablement déterminées sont perdues.

De plus, en l'absence de l'état de recalage suspendu, il est nécessaire que les conditions de fonctionnement soient satisfaites pendant toute la durée d'exécution de l'algorithme de recalage pour s'assurer de la pertinence de la valeur obtenue. Ceci suppose donc, soit un algorithme de recalage rapide pour la détermination de la valeur du paramètre de contrôle du fonctionnement du moteur, de sorte qu'il est peu probable que les conditions de fonctionnement définies sévèrement varient de manière significative lors de cette exécution, soit des conditions de fonctionnement qui soient peu contraignantes pour pouvoir être vérifiées pendant toute la durée de l'exécution d'un algorithme de recalage coûteux en temps de calcul.

La détermination d'une valeur satisfaisante pour certains paramètres de contrôle nécessitant des algorithmes coûteux en temps de calcul, la première possibilité, c'est-à-dire une absence de variation significative de conditions de fonctionnement définie sévèrement, peut s'avérer difficilement vérifiable. Ceci suppose donc de considérer préférentiellement la seconde possibilité, à savoir des conditions de fonctionnement définies de manière peu contraignante. Toutefois, moins les conditions de fonctionnement lors de l'exécution de l'algorithme de recalage sont définies de manière contraignante, moins la validité de la valeur finalement obtenue pour le paramètre est assurée.

Ainsi, un autre avantage non négligeable de l'invention, du fait de définir un état de recalage suspendu, est de pouvoir choisir un recalage du paramètre utilisant l'algorithme le mieux adapté, indépendamment de sa durée d'exécution, tout en s'assurant de la pertinence de la valeur finalement obtenue par la définition de conditions de fonctionnement contraignantes.

L'état de fonctionnement des moyens de recalage est donc déterminé en fonction de conditions de fonctionnement du moteur. L'invention permet à cette fin d'associer aux transitions entre deux états distincts de fonctionnement des moyens de recalage, Ei et Ej respectivement, des conditions sur la transition Cij entre Ei et Ej. Si les moyens de recalage fonctionnent dans l'état Ei et que les conditions sur la transition Cij sont vérifiées, alors les moyens de recalage sont commandés pour fonctionner dans l'état Ej.

A cet effet, le système de supervision selon l'invention comprend des moyens 24 de commande de l'état de fonctionnement des moyens de recalage, adaptés pour mettre en oeuvre un diagramme d'état des états de fonctionnement des moyens 22 de recalage et commander les transitions entre les différents états de fonctionnement des moyens 22 de recalage.

Il est particulièrement avantageux d'utiliser les conditions suivantes sur les transitions :
- entre l'état de recalage invalide et l'état de recalage actif : le point de fonctionnement appartient à une première plage prédéterminée de fonctionnement. Par exemple, pour le recalage de la quantité de carburant injectée dans un cylindre lors de l'injection pilote, le point de fonctionnement appartient à la plage prédéterminée de valeurs de régime et de charge associée au point de recalage sélectionné, et les valeurs des variations instantanées de régime et de charge sont inférieures respectivement à des valeurs de seuil prédéterminées, et la température du liquide de refroidissement appartient une plage prédéterminée de température compatible avec le fonctionnement du moteur et/ou avec le recalage du paramètre de fonctionnement.
- entre l'état de recalage actif et l'état de recalage suspendu : le point de fonctionnement appartient à une seconde plage prédéterminée de fonctionnement. Par exemple, pour le recalage de la quantité de carburant injectée dans un cylindre lors de l'injection pilote, les valeurs du régime et de la charge ne sont plus comprises dans la plage prédéterminée de valeurs de régime et de charge associée au point de recalage sélectionné ou les valeurs des paramètres d'injection du cylindre ne sont plus comprises dans une plage prédéterminée de valeurs des paramètres d'injection. Cette plage de valeurs de paramètres d'injection du cylindre comprend la valeur initiale des paramètres d'injection déterminée juste avant le lancement de l'algorithme de recalage.
- entre l'état de recalage suspendu et l'état de recalage actif : le point de fonctionnement appartient à une troisième plage de fonctionnement. Par exemple, pour le recalage de la quantité de carburant injectée dans un cylindre lors de l'injection pilote, le point de fonctionnement appartient à la plage prédéterminée de valeurs de régime et de charge associée au point de recalage sélectionné et les valeurs des paramètres d'injection du cylindre sont comprises dans la plage prédéterminée de valeurs des paramètres d'injection.
- entre l'état de recalage suspendu et l'état de recalage invalide : le temps (ou le nombre de cycles de cylindre) passé dans l'état de recalage suspendu par les moyens de recalage est supérieur à une valeur prédéterminée de seuil de durée (ou de nombre de cycles de cylindre).

Comme on peut le constater, les conditions de transitions peuvent être de natures différentes. Une partie des conditions de transition peut être déterminée une seule fois, par exemple en sortie d'usine. Cela peut être le cas des plages de valeurs de régime et de charge associées aux points de recalage.

D'autres conditions de transition dépendent des conditions de fonctionnement du moteur au début du recalage. C'est le cas des valeurs des paramètres d'injection qui ne doivent pas s'écarter de manière significative de leurs valeurs initiales au risque d'obtenir une valeur non satisfaisante pour la quantité de carburant injectée dans le cylindre lors de l'injection pilote.

D'autres conditions de transition sont de nature temporelle. Comme il est décrit précédemment, il peut s'agir d'une durée écoulée ou d'un nombre de cycles de cylindre.

L'avantage de ces conditions temporelles est d'invalider le recalage au bout d'un certain temps passé dans l'état de recalage suspendu. En effet, il peut être estimé qu'au delà d'une certaine durée (ou d'un certain nombre de cycles de cylindre), le recalage doit être stoppé. Par exemple, si le recalage a débuté pour une première valeur de régime mais que la valeur du régime moteur actuellement demandée de manière constante pendant une durée significative par le conducteur du véhicule est différente, le recalage du paramètre pour le point de recalage sélectionné doit être stoppé et un recalage doit être lancé pour la valeur de régime actuelle.

Pour tester l'ensemble de ces conditions de fonctionnement, le système de supervision selon l'invention comprend des moyens 26 de détermination de plages de fonctionnement qui déterminent les plages de fonctionnement en fonction du point de recalage sélectionné et de la valeur initiale du point de fonctionnement. Les moyens 26 de détermination déterminent ces plages de fonctionnement à la suite de la sélection du point de recalage ou simultanément à celle-ci.

Les plages de fonctionnement déterminées par les moyens 26 de détermination sont alors envoyées et stockées dans des moyens 28 de comparaison raccordés aux moyens 24 de commande de l'état de fonctionnement des moyens de recalage. Les moyens 28 de comparaison reçoivent en entrée la valeur du point de fonctionnement des moyens 14 d'acquisition, comparent cette valeur aux plages de fonctionnement et envoie le résultat de cette comparaison aux moyens 24 de commande de l'état de fonctionnement des moyens de recalage. Les moyens 24 de commande de l'état de fonctionnement des moyens de recalage sont également raccordés à une horloge 29. En fonction des résultats envoyés par les moyens 28 de comparaison et la valeur de l'horloge 29, les moyens 24 de commande de l'état de fonctionnement des moyens de recalage commande les transitions entre les états, comme cela a été expliqué précédemment.

Il est également possible d'utiliser à la place de l'horloge 29 un compteur de cycles de cylindre pour obtenir une valeur caractéristique du temps passé dans l'état de recalage suspendu par les moyens 22 de recalage.

Une fois le recalage terminé pour le point de recalage sélectionné, c'est-à-dire la valeur du paramètre de contrôle déterminée avec succès, la nouvelle valeur du paramètre pour le point de recalage est alors fournie aux moyens 12 de cartographie pour la mise à jour de ses valeurs, un nouveau point de recalage est sélectionné et le recalage pour ce nouveau point de recalage peut alors débuter. Si tous les points de recalage ont été sélectionnés alors le recalage de la valeur du paramètre de contrôle du fonctionnement du moteur est terminé.

Si la valeur du paramètre de contrôle pour un point de fonctionnement est considérée de façon indépendante des valeurs du paramètre pour les autres points de fonctionnement, le système de supervision selon l'invention détermine si un recalage d'un paramètre doit être déclenché, en surveillant les conditions qui doivent être remplies pour le déclenchement du recalage de ce paramètre de contrôle, comme cela a été expliqué précédemment.

Comme il a été décrit précédemment, le système de supervision selon l'invention est adapté pour superviser le recalage de plusieurs paramètres de contrôle du fonctionnement du moteur. Ainsi, si un recalage est déjà déclenché et qu'un recalage moins prioritaire doit être exécuté, les moyens 18 de déclenchement peuvent inhiber ce recalage moins prioritaire le temps que le recalage en cours d'exécution se termine. Sinon les moyens 18 de déclenchement peuvent également suspendre ou stopper un recalage en cours si un recalage plus prioritaire est nécessaire. Pour cela, les moyens 18 de déclenchement sont raccordés aux moyens 24 de commande de l'état de fonctionnement des moyens de recalage et leur fournissent un signal d'inhibition ou de suspension ou d'arrêt du recalage en cours selon les besoins, et les moyens 24 de commande de l'état de fonctionnement des moyens de recalage commandent les moyens 22 de recalage en conséquence.

Enfin, le système de supervision selon l'invention comprend des moyens 30 de diagnostic adaptés pour émettre un diagnostic sur l'état de fonctionnement du moteur et des différents systèmes embarqués. Les cas typiques de dysfonctionnement sont les dysfonctionnement des injecteurs, du contrôle de la pression de la rampe commune d'alimentation des moteurs Diesel pourvus d'une rampe commune d'alimentation, les fautes sur les capteurs comme le capteur de régime du moteur, les capteurs de pression dans les cylindres ou encore la surchauffe du liquide de refroidissement.

Lorsqu'un dysfonctionnement est détecté par les moyens 30 de diagnostic, un diagnostic est émis vers les moyens 24 de commande de l'état de fonctionnement des moyens de recalage qui invalident alors le recalage en cours. Le moteur peut alors être commandé dans un mode prédéterminée de fonctionnement dégradé.

Un mode de réalisation particulier du superviseur selon l'invention est maintenant décrit en relation avec le recalage de la quantité de carburant injectée dans les cylindres lors de l'injection pilote d'un moteur Diesel, du type comportant des moyens à rampe commune d'alimentation en carburant du moteur par injections multiples de carburant dans chaque cylindre de celui-ci, adaptés pour déclencher une alimentation en carburant de chaque cylindre selon au moins une injection pilote et une injection principale de carburant.

Dans ce mode de réalisation, la valeur de la quantité de carburant injectée dans les cylindres pour un point de recalage est considéré comme un paramètre de contrôle en tant que tel.

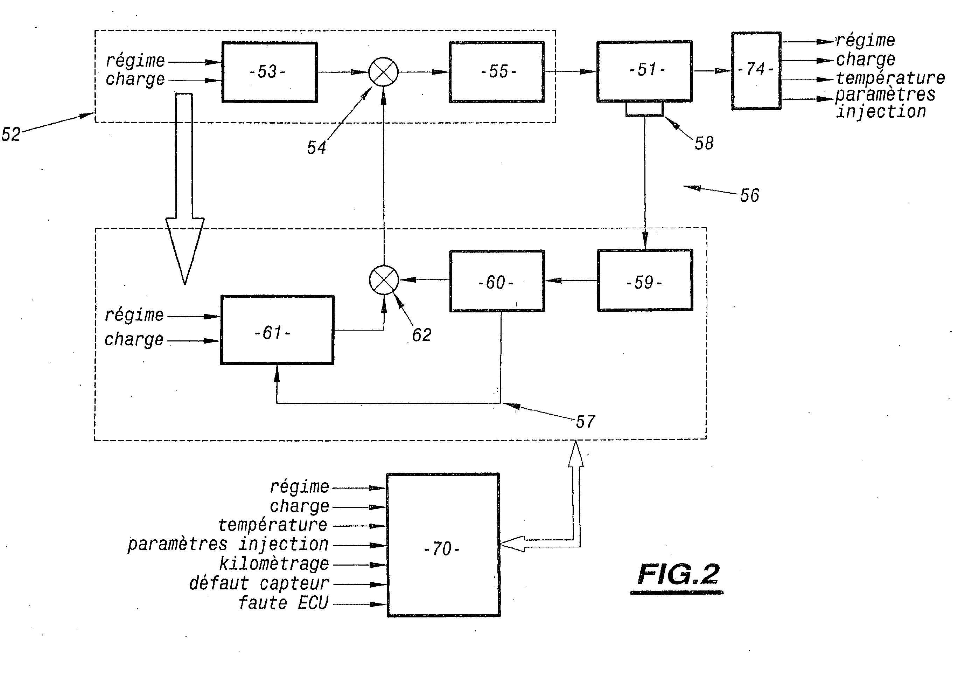

Cette description est réalisée en référence aux figures 2 à 4.

On sait que dans un moteur Diesel de véhicule automobile, comportant des moyens à rampe commune d'alimentation en carburant des cylindres du moteur, les moyens de commande de ceux-ci sont adaptés pour déclencher une injection de carburant dans chaque cylindre du moteur, selon au moins une injection pilote et une injection principale de carburant.

Ceci est illustré sur la figure 2, dans laquelle le moteur Diesel est désigné par la référence générale 51, tandis que des moyens 52 de contrôle de l'injection de carburant dans celui-ci délivrent donc des impulsions de contrôle du fonctionnement des injecteurs associés aux cylindres du moteur, pour assurer une telle injection de carburant dans le moteur.

Ces moyens comprennent des moyens 53 de cartographie initiale recevant en entrée des informations, notamment de régime et de charge du moteur, pour délivrer une information de consigne d'injection, relative notamment à la quantité de carburant injectée dans les cylindres lors de l'injection pilote.

Cette information de consigne est alors transmise à un additionneur 54 dont la sortie est reliée à des moyens 55 de cartographie d'injecteur, permettant de délivrer les informations correspondantes de contrôle de l'injection.

Ce système comporte également des moyens 56 d'acquisition du ratio des gradients de pression maximum de l'injection pilote et de l'injection principale dans les cylindres du moteur et des moyens d'analyse de ce ratio, associés à des moyens 57 de modification de la quantité de carburant injectée dans chaque cylindre lors de l'injection pilote, afin d'optimiser le bruit de fonctionnement du moteur.

Les moyens 56 d'acquisition du ratio des gradients de pression maximum de l'injection pilote et de l'injection principale dans les cylindres du moteur comprennent par exemple, un capteur de pression cylindre 58, associé à chaque cylindre du moteur, et adapté pour délivrer une information de pression à des moyens 59 de calcul de ce ratio, à partir de ces informations de pression.

Les moyens 57 de modification comprennent quant à eux, d'une part, des moyens 60 de recalage, et d'autre part, des moyens 61 de cartographie de correction de la quantité de carburant injectée dans les cylindres lors de l'injection pilote, dont les sorties sont associées à travers un additionneur 62.

Les moyens 61 de cartographie de correction reçoivent en entrée des informations de régime et de charge et sont adaptés pour délivrer des informations de correction de la quantité de carburant injectée dans les cylindres lors de l'injection pilote, délivrée par les moyens 53 de cartographie initiale.

Ces moyens 57 de modification ne sont déclenchés à intervalles réguliers, que sur un nombre déterminé de points de recalage prédéfinis du moteur, un point de recalage étant défini par une valeur prédéterminée de régime et une valeur prédéterminée de charge.

Par exemple, pour chaque point de recalage, les moyens 60 de recalage peuvent être adaptés pour déterminer une variation de la quantité de carburant injectée dans un cylindre lors de l'injection pilote qui est fournie à l'additionneur 62, analyser le bruit de fonctionnement du moteur résultant par les moyens 59 d'analyse du ratio des gradients de pression maximum de l'injection pilote et de l'injection principale du moteur et déterminer une nouvelle variation de quantité de carburant injectée lors de l'injection pilote en fonction de cette analyse, et réitérer ce processus, jusqu'à ce qu'une valeur satisfaisante de quantité de carburant injectée lors de l'injection pilote soit déterminée.

Le fonctionnement des moyens 57 de modification est supervisé par un système de supervision 70 en fonction, notamment, du régime et de la charge, de la température du liquide de refroidissement, des paramètres d'injections dans les cylindres, du kilométrage parcouru par le véhicule, des autres recalages des paramètres du contrôle du fonctionnement du moteur, des défauts des capteurs et des fautes ECU. Les fautes ECU sont notamment les dysfonctionnements des injecteurs associés aux cylindres, les dysfonctionnements du contrôle de la pression dans la rampe commune d'alimentation en carburant des cylindres, ou les fautes du capteur de régime du moteur, ou la surchauffe du liquide de refroidissement. Pour cela le système 70 de supervision est raccordé à des moyens 74 d'acquisition des valeurs du régime, de la charge, de la température du liquide de refroidissement et des paramètres d'injection associés au moteur 51.

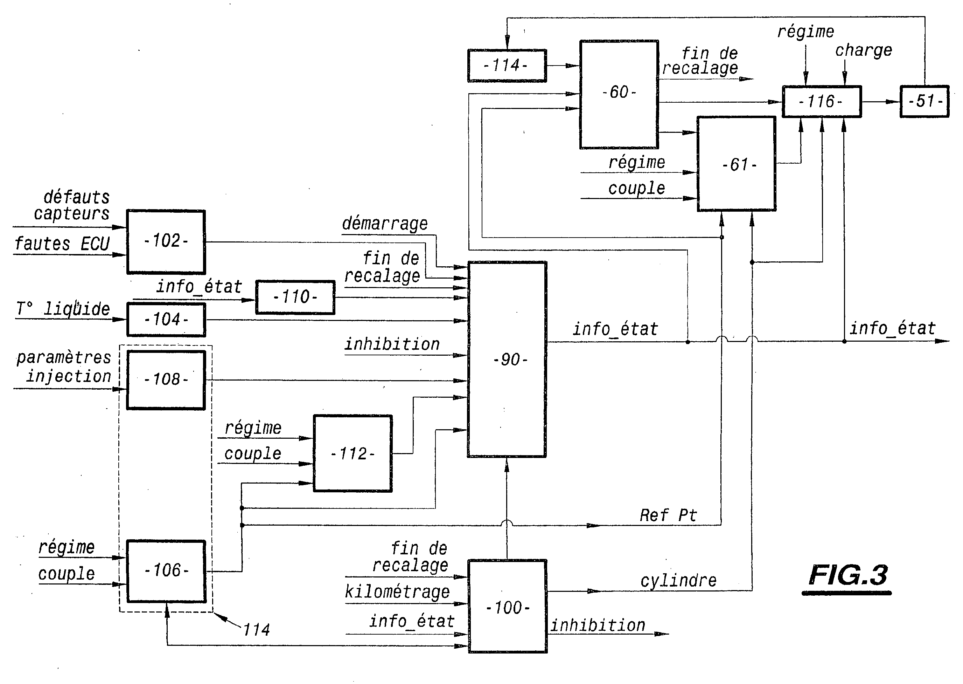

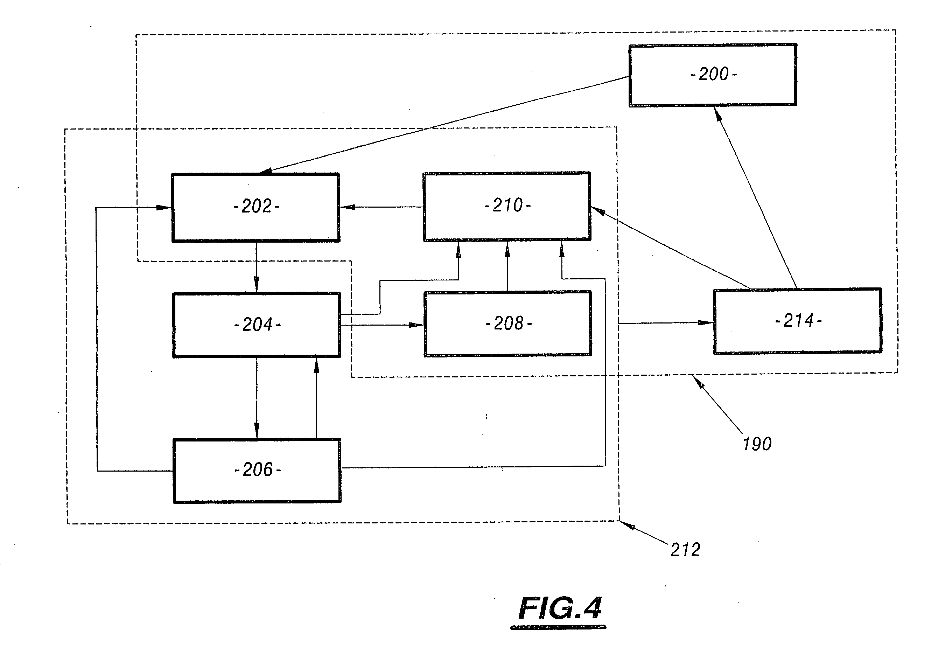

Une description détaillée du fonctionnement du système de la figure 2 est maintenant donnée en référence aux figures 3 et 4.

Le système de supervision 70 comprend des moyens 90 de commande de l'état de fonctionnement des moyens 60 de recalage. Ces moyens 90 de commande sont adaptés pour commander le fonctionnement des moyens 60 de recalage et des différents moyens constitutifs du système de supervision 70 en mettant en oeuvre un diagramme d'état, comme cela sera expliqué plus en détail par la suite.

Les moyens 90 de commande reçoivent en entrée un signal en provenance de moyens 100 de déclenchement adaptés pour mettre en oeuvre une stratégie globale prédéterminée de gestion des recalages des paramètres de contrôle du fonctionnement du moteur, ainsi qu'une stratégie prédéterminée de déclenchement du recalage pour chaque paramètre de contrôle du fonctionnement du moteur, et de moyens 102 de diagnostic, adaptés pour émettre un diagnostic en fonction des défauts des capteurs et des fautes ECU.

Les moyens 90 de commande reçoivent également un signal d'entrée en provenance de moyens 104 de comparaison de la température du liquide refroidissement à une plage prédéterminée de valeurs de température, adaptés pour vérifier si la température du liquide de refroidissement appartient à la plage prédéfinie de valeurs de température, de moyens 106 de détection du point de recalage, adaptés pour vérifier si les valeurs du régime et de la charge appartiennent à des plages prédéterminées de valeurs de régime et de charge, chacune associée à un point de recalage de l'ensemble des points de recalage, et de moyens 108 de comparaison de la valeur des paramètres d'injection à une plage prédéterminée de valeurs de paramètres d'injection, adaptés pour vérifier si les valeurs des paramètres d'injection appartiennent à une plage de valeurs de paramètres d'injection déterminée lors du premier lancement de l'algorithme de recalage, comme cela sera expliqué plus en détails par la suite.

Les moyens 90 sont par ailleurs raccordés à des moyens 110 de temporisation, adaptés pour compter le nombre de cycles de cylindre passé par les moyens 60 de recalage dans un état de recalage suspendu et des moyens 112 de comparaison des valeurs de la variation du régime et de la charge à une plage prédéterminée de valeurs de variations de régime et de charge. Les moyens 112 sont adaptés pour vérifier si la valeur des variations du régime est inférieure à une valeur seuil de variation du régime déterminée en fonction du point de recalage sélectionné pour le recalage et si la valeur des variations de la charge est inférieure à une valeur seuil de variations de la charge déterminée en fonction du point de recalage sélectionné.

Pour des raisons de concision, il a été regroupé dans des moyens 114 d'acquisition et de calcul les moyens 56 d'acquisition du ratio des gradients de pression maximum de l'injection pilote et de l'injection principale du moteur 51 et les moyens 59 de calcul du ratio des gradients de pression maximum de l'injection pilote et de l'injection principale pour acquérir la pression dans le cylindre sélectionné du moteur 51 et déterminer la note de bruit de combustion associée. Ces moyens 114 délivrent la valeur du ratio des gradients de pression maximum de l'injection pilote et de l'injection principale aux moyens 60 de recalage comme cela a été précédemment décrit. Pour les mêmes raisons, il a été regroupé dans des moyens 116 d'application des corrections raccordés au moteur 51, les additionneurs 62 et 54, les moyens 53 de cartographie initiale et les moyens 55 de cartographie des injecteurs.

En fonction des signaux reçus des différents moyens 100, 102, 104, 106, 108, 110 et 112, les moyens 90 de commande de l'état de fonctionnement des moyens 60 de recalage commandent les différents éléments du système de supervision 70 comme cela est maintenant expliqué ci-dessous, en référence à la figure 4 qui illustre un diagramme d'état mis en oeuvre par les moyens 90 de commande pour notamment commander le fonctionnement des moyens 60 de recalage.

Un premier état 190 est un état de recalage invalide. Cet état 190 présente plusieurs sous-états, et notamment un sous-état 200 de démarrage qui est un état d'initialisation générale à la suite du démarrage du véhicule. L'ensemble des données et paramètres nécessaires au fonctionnement des systèmes embarqués et donc du système 70 de supervision est chargé depuis une mémoire non volatile. Une fois cette initialisation réalisée, les moyens 90 de commande déclenchent la transition dans un état 202 d'application qui est un second sous-état 202 de l'état 190 de recalage invalide. Dans cet état, les moyens 90 de commande activent les moyens 61 de cartographie correctrice et les moyens 116 d'application des corrections, ce qui permet d'appliquer les corrections stockées dans les moyens 61 de cartographie correctrice entre deux instants de recalage de la quantité de carburant injectée dans les cylindres lors de l'injection pilote.

Les moyens 90 de commande activent également, s'ils ne l'étaient pas, les moyens 100 de déclenchement et les moyens 106 de détection du point de recalage. L'activation des moyens 100 de déclenchement lance le processus de stratégie globale de gestion des recalages des paramètres de fonctionnement ainsi que les stratégies de déclenchement du recalage de chacun des paramètres, comme cela a été expliqué précédemment.

En ce qui concerne le recalage de la quantité pilote injectée dans les cylindres pour le point de recalage, considéré dans ce mode de réalisation du système de supervision selon l'invention comme un paramètre de contrôle unique, les moyens 100 reçoivent en entrée le nombre de kilomètres parcouru par le véhicule et déterminent le nombre de kilomètres parcouru par le véhicule depuis le dernier recalage de la quantité de carburant injectée dans les cylindres pour le point de recalage. Parallèlement, les moyens 106 de détection du point de recalage vérifient si les valeurs du régime et de la charge sont comprises dans la plage prédéterminée de valeurs associée au point de recalage.

Si effectivement les valeurs de régime et de charge sont comprises dans cette plage, les moyens 106 de détection envoient aux moyens 100 de déclenchement un signal les en avertissant, et si le nombre de kilomètres parcouru depuis le dernier recalage de la quantité injectée dans les cylindres pour le point de recalage est supérieur à une valeur prédéterminée de seuil de kilomètres et qu'aucun autre recalage plus prioritaire n'est en cours, les moyens 106 déclenchent le recalage de la valeur de la quantité de carburant injectée dans les cylindres pour le point de recalage et envoient un signal de déclenchement correspondant aux moyens 90 de commande.

Si un autre recalage plus prioritaire est actuellement en cours, les moyens 100 de déclenchement envoient alors un signal d'inhibition aux moyens 90 de commande qui inhibent en retour l'exécution du recalage de la quantité de carburant injectée dans les cylindres lors de l'injection pilote, tant que le recalage du paramètre plus prioritaire est toujours en cours.

Une fois le recalage déclenché, si le signal envoyé par les moyens 104 de comparaison de la température du liquide refroidissement à la plage prédéterminée de valeurs de température est significatif de l'appartenance de la valeur de la température du liquide de refroidissement à la plage prédéterminée de valeurs de température et si le signal envoyé par les moyens 112 de comparaison des valeurs de la variation instantanée du régime et de la charge à une plage prédéterminée de valeurs de variations de régime et de charge correspond à une valeur de variation du régime inférieure à une valeur prédéterminé de seuil de variation de régime et à une valeur de variation de charge inférieure à une valeur prédéterminée de seuil de variation de charge, alors toutes les conditions sont réunies pour exécuter l'algorithme de recalage.

Si au moins l'une des conditions n'est pas satisfaite, les moyens 90 de commande continuent de surveiller l'occurrence de la vérification de l'ensemble des conditions tant que les valeurs du régime et de la charge sont comprises dans la plage prédéterminée de valeurs de régime et de charge associée au point de recalage et qu'aucun recalage plus prioritaire n'est nécessaire.

Si lors de cette surveillance, les valeurs du régime et de la charge ne sont plus comprises dans la plage prédéterminée de valeurs de régime et de charge, le recalage est désenclenché et la surveillance des conditions de déclenchement du recalage d'un paramètre est alors exécuté de la manière précédemment décrite. De même, si un recalage plus prioritaire devient nécessaire lors de cette surveillance, le recalage est inhibé par les moyens 90 de commande.

Pour déterminer si les valeurs des variations du régime et de la charge sont comprises dans la plage prédéterminée de valeurs de variation, les moyens 112 de comparaison des valeurs de la variation du régime et de la charge reçoivent en entrée des mesures du régime et de la charge, ainsi qu'un signal représentatif du point de recalage, fourni par les moyens 106 de détection du point de recalage. Les moyens 112 de comparaison dérivent alors les signaux de mesure du régime et de la charge pour obtenir les variations du régime et de la charge et comparent ces valeurs de dérivées aux valeurs respectives de seuils de variation. Ces valeurs de seuil de variations sont déterminées en fonction du point de recalage. A cet effet les moyens 112 de comparaison contiennent une table de correspondance qui délivre la valeur de seuil de variation du régime et la valeur de seuil de variation de charge en fonction du point de recalage fourni par les moyens 106 de détection.

Une fois que toutes les conditions sont réunies pour exécuter l'algorithme de recalage, les moyens 100 de déclenchement sélectionnent un cylindre pour être recalé en quantité de carburant injectée lors de l'injection pilote, et les moyens 108 de comparaison des valeurs des paramètres d'injection mémorisent alors les valeurs des paramètres d'injection reçues en entrée et déterminent la plage de valeurs de paramètres d'injection comme étant une plage de tolérance d'amplitude prédéterminée centrée sur les valeurs des paramètres d'injection mémorisées. Les moyens 60 de recalage sont alors initialisés, et notamment l'algorithme de recalage, en fonction des données précédemment déterminées, c'est-à-dire le choix du cylindre, du point de recalage, et les paramètres nécessaires à son fonctionnement.

Une fois l'algorithme initialisé, les moyens 90 de commande de l'état de fonctionnement des moyens de recalage déclenchent alors la transition du sous-état 202 d'application de l'état 190 de recalage invalide à l'état 204 de recalage actif, ce qui permet de lancer l'exécution de l'algorithme de recalage.

Parallèlement à l'exécution de l'algorithme, les moyens 90 de commande surveillent si les valeurs du régime et de la charge restent comprises dans la plage prédéterminée de valeurs de régime et de charge associée au point de recalage, et si les valeurs des paramètres d'injections restent comprises dans la plage de valeurs de paramètres d'injection associée aux valeurs initiales des paramètres d'injection, grâce aux signaux envoyés par les moyens 106 de détection du point de recalage et aux moyens 108 de comparaison des valeurs de paramètres d'injection qui fournissent de manière continue aux moyens 90 de commande des informations relatives à l'appartenance des valeurs à leurs plages respectives.

Dès qu'une des conditions précédentes n'est plus vérifiée, c'est-à-dire si les valeurs des paramètres d'injection ne sont plus comprises dans la plage de valeurs de paramètres d'injection associée aux valeurs initiales des paramètres d'injection ou si les valeurs du régime et de la charge ne sont plus comprises dans la plage de valeurs de régime et de charge associée au point de recalage, les moyens 90 de commande déclenchent la transition de l'état de recalage actif à un état 206 de recalage suspendu.

Dans cet état, l'algorithme de recalage est suspendu, c'est-à-dire qu'il est stoppé et que l'environnement d'exploitation de l'algorithme lors de son arrêt est sauvegardé en mémoire, de sorte qu'il est ultérieurement possible de relancer l'exécution de l'algorithme depuis l'état dans lequel il a été stoppé et ainsi poursuivre la détermination de la valeur de la quantité de carburant injectée dans le cylindre sélectionné lors de l'injection pilote sans avoir perdu aucune information relative aux résultats acquis par l'algorithme avant son arrêt.

Dès que les moyens 60 de recalage basculent dans l'état 206 de recalage suspendu, les moyens 90 de commande initialisent les moyens 110 de temporisation qui commencent alors à compter le nombre de cycles de cylindre passé dans l'état de recalage suspendu par les moyens 60 de recalage. Parallèlement, les moyens 90 de commande surveillent si des conditions sont réunies pour de nouveau faire basculer les moyens 60 de recalage dans l'état de recalage actif, c'est-à-dire si les valeurs des paramètres d'injection sont comprises dans la plage prédéterminée de valeurs de paramètres d'injection associée aux valeurs initiales des paramètres d'injection et si les valeurs du régime et du couple sont comprises dans la plage de valeurs de régime et de couple associée au point de recalage.

Si le nombre de cycles de cylindre passé par les moyens 60 de recalage dans l'état de recalage suspendu est supérieur à un nombre de cycles de cylindre prédéterminé, les moyens 90 de commande déclenchent alors la transition de l'état 206 de recalage suspendu au sous-état 202 d'application de l'état 190 de recalage invalide.

Si ces conditions sont de nouveau réunies, les moyens 90 de commande de l'état de fonctionnement des moyens de recalage déclenchent la transition de l'état 206 de recalage suspendu à l'état de recalage actif.

Lorsqu'une exécution complète de l'algorithme pour le cylindre sélectionné est réalisée, c'est-à-dire lorsque la valeur de la quantité de carburant injectée de le cylindre pour le point de recalage a été déterminée avec succès, les moyens 60 de recalage envoient un signal de fin de recalage aux moyens 90 de commande qui déclenchent en retour la transition de l'état 204 de recalage actif à un sous-état 208 d'enregistrement de l'état 190 de recalage invalide. La valeur déterminée est alors envoyée aux moyens 61 de cartographie correctrice qui mettent en conséquence à jour les valeurs de quantité de carburant injectée lors de l'injection pilote et le cylindre est considéré comme étant recalage en quantité de carburant injectée lors de l'injection pilote pour le point de recalage.

A la fin du recalage, les moyens 90 de commande déclenchent la transition du sous-état 208 d'enregistrement à un sous-état 210 de réinitialisation dans lequel les moyens 60 de recalage sont réinitialisées. Si tous les cylindres ont été recalés, la stratégie de déclenchement de la quantité de carburant injectée dans les cylindres pour le point de recalage est également réinitialisée et l'état de la stratégie globale mis à jour pour lever les inhibitions éventuelles induites par le recalage. Une fois la réinitialisation terminée, les moyens 90 de commande déclenchent la transition de ce sous-état au sous-état 202 d'application, dans lequel, notamment, un cylindre pour lequel le recalage n'a pas encore été effectué, s'il en reste va être sélectionné par les moyens 100 de déclenchement.

Les états 202, 204, 206 208 et 210 peuvent être caractérisés en tant qu'état 212 de fonctionnement nominal du système de supervision selon l'invention.

A tout moment, lorsque le système de supervision se trouve dans cet état, les moyens 102 de diagnostic peuvent émettrent un signal de dysfonctionnement vers les moyens 90 de commande quand une faute sur un capteur ou une faute ECU est détectée. Les moyens 90 de commande stoppent alors l'algorithme de recalage s'il est en cours d'exécution et déclenchent la transition dans un sous-état 214 de mode dégradé de l'état 190 de recalage invalide, dans lequel le moteur est commandé dans un mode prédéterminé de fonctionnement dégradé. Il est alors par exemple possible de basculer dans le sous-état 210 de réinitialisation quand toutes les conditions ayant provoqué la transition dans le sous-état 214 de mode dégradé sont levées. Sinon, les moyens de commande déclenchent la transition du sous-état 214 de mode dégradé au sous-état 200 de démarrage lorsque le véhicule est démarré ultérieurement.

Enfin, lorsque les moyens 60 de recalage sont dans l'état 204 de recalage actif ou dans l'état 206 de recalage suspendu, les moyens 108 de déclenchement peuvent émettre vers les moyens 90 de recalage un signal de recalage prioritaire signifiant que le recalage d'un paramètre considéré comme plus prioritaire que le recalage de la quantité de carburant injectée dans les cylindres pour le point de recalage est nécessaire. En réponse les moyens 90 de commande stoppent l'exécution de l'algorithme si celle-ci est en cours, et déclenchent alors la transition de l'état courant de recalage vers l'état le sous-état 210 de réinitialisation de l'état 190 de recalage invalide, ce qui permet, une fois le basculement subséquent dans le sous-état 202 d'application, de déclencher le recalage du paramètre de contrôle plus prioritaire.

Bien entendu d'autres modes de réalisation sont possibles sans sortir du cadre de la présente invention.

## Revendications

1. Système de supervision du recalage d'au moins un paramètre de contrôle du fonctionnement d'un moteur (10 ;51) de véhicule automobile, du type comportant des moyens (22 ;60) de recalage dudit au moins un paramètre de contrôle du fonctionnement du moteur pour un moins un point de recalage et des moyens (18 ;100) de déclenchement du recalage dudit au moins un paramètre de contrôle du fonctionnement du moteur, **caractérisé en ce que** les moyens (22 ;60) de recalage présentent au moins deux états de fonctionnement, à savoir un état de recalage actif et un état de recalage suspendu, et **en ce que** le système comprend :
- des moyens (14) d'acquisition d'informations relatives au point de fonctionnement du moteur;
- des moyens (28 ;102,104,106,108) de comparaison du point de fonctionnement du moteur à des plages prédéterminées de fonctionnement du moteur associées aux transitions entre les états de recalage actif et suspendu des moyens de recalage;
- des moyens (24 ;90) de commande de l'état de fonctionnement des moyens de recalage adaptés pour :
a) commander la transition des moyens de recalage de l'état de recalage actif à l'état de recalage suspendu lorsque le point de fonctionnement du moteur est compris dans la plage prédéterminée de fonctionnement associée à la transition de l'état de recalage actif à l'état de recalage suspendu, afin de suspendre le recalage du au moins un paramètre de contrôle du fonctionnement du moteur;
b) commander au moins une fois la transition de l'état de recalage suspendu à l'état de recalage actif lorsque le point de fonctionnement du moteur est compris dans la plage prédéterminée de fonctionnement associée à la transition de l'état de recalage suspendu à l'état de recalage actif, afin de poursuivre le recalage du au moins un paramètre de contrôle du fonctionnement du moteur.

2. Système selon la revendication 1, **caractérisé en ce que** les moyens (22 ;60) de recalage présentent au moins un troisième état de fonctionnement à savoir un état de recalage invalide et **en ce que** :
- les moyens de comparaison sont adaptés pour comparer le point de fonctionnement du moteur à une plage prédéterminée de fonctionnement du moteur associée à la transition de l'état de recalage invalide à l'état de recalage actif ;
- les moyens de commande de l'état de fonctionnement des moyens de recalage sont adaptés pour commander la transition des moyens de recalage de l'état de recalage invalide à l'état de recalage actif lorsque le point de fonctionnement du moteur appartient à la plage prédéterminée de fonctionnement du moteur associée à la transition de l'état de recalage invalide à l'état de recalage actif, afin de débuter le recalage du au moins un paramètre de contrôle du fonctionnement du moteur.

3. Système selon la revendication 2, **caractérisé en ce qu'**il comprend des moyens (29 ;110) d'acquisition d'une valeur caractéristique d'une durée de suspension des moyens (22 ;60) de recalage et **en ce que** les moyens (24 ;90) de commande de l'état de fonctionnement des moyens de recalage sont adaptés pour commander la transition de l'état de recalage suspendu à l'état de recalage invalide si la valeur caractéristique de la durée de suspension est supérieure ou égale à un seuil de durée prédéterminé.

4. Système selon la revendication 3, **caractérisé en ce que** les moyens (29 ;110) d'acquisition de la valeur caractéristique de la durée de suspension comprennent une horloge (29) adaptée pour mesurer le temps écoulé dans l'état de recalage suspendu par les moyens de recalage et **en ce que** la durée de suspension des moyens de recalage est le temps passé par les moyens de recalage dans l'état de recalage suspendu.

5. Système selon l'une quelconque des revendications précédentes, **caractérisé en ce qu'**il comprend des moyens (26 ;104 ;106,108,112) de détermination des plages prédéterminées de fonctionnement du moteur adaptés pour déterminer, successivement au déclenchement du recalage du au moins un paramètre de contrôle du fonctionnement du moteur par les moyens (18 ;100) de déclenchement du recalage, les plages prédéterminées de fonctionnement en fonction du au moins un point de recalage et de la valeur initiale du point de fonctionnement du moteur.

6. Système selon l'une quelconque des revendications précédentes, **caractérisé en ce qu'**il comprend des moyens (30 ;102) de diagnostic des dysfonctionnements du moteur (10 ;51) raccordés aux moyens (24 ;90) de commande de l'état de fonctionnement des moyens de recalage, et **en ce que** les moyens (24 ;90) de commande de l'état de fonctionnement des moyens de recalage sont adaptés pour invalider le recalage lorsqu'un dysfonctionnement du moteur est détecté par les moyens(30 ;102) de diagnostic.

7. Système selon l'une quelconque des revendications précédentes, **caractérisé en ce que** les moyens (18 ;100) de déclenchement du recalage sont en outre adaptés pour mettre en oeuvre une stratégie prédéterminée de gestion prioritaire des recalages des paramètres de contrôle du fonctionnement du moteur.

8. Système selon la revendication 7, **caractérisé en ce que** les moyens (18 ;100) de déclenchement sont adaptés pour invalider ou suspendre le recalage en cours d'un paramètre de contrôle du fonctionnement du moteur si le recalage d'un paramètre plus prioritaire est nécessaire.

9. Système selon la revendication 7 ou 8, **caractérisé en ce que** les moyens (18 ;100) de déclenchement sont adaptés pour inhiber le recalage d'un paramètre devant être réalisé si le recalage d'un paramètre plus prioritaire est en cours d'exécution.

10. Système selon l'une quelconque des revendications précédentes, **caractérisé en ce que** le moteur (10 ;51) de véhicule automobile est un moteur Diesel du type comportant des moyens à rampe commune d'alimentation en carburant du moteur par injections multiples de carburant dans chaque cylindre de celui-ci, adaptés pour déclencher une alimentation en carburant de chaque cylindre selon au moins une injection pilote et une injection principale de carburant, et **en ce que** :
- le au moins un paramètre de contrôle du fonctionnement du moteur est la quantité de carburant injectée dans un cylindre lors de l'injection pilote ;
- le au moins un point de recalage est déterminé par les valeurs prédéterminées du régime et de la charge de fonctionnement du moteur, ce au moins un point de recalage étant associé à une plage prédéterminée de valeurs de régime le comprenant;
- le point de fonctionnement est déterminé par les valeurs du régime, de la charge, de la température du liquide de refroidissement et des paramètres d'injection du cylindre.

11. Système selon la revendication 10, **caractérisé en ce que** les moyens (18 ;100) de déclenchement du recalage sont adaptés pour déclencher le recalage de la quantité de carburant injectée dans le cylindre lors de l'injection pilote si le nombre de kilomètres parcourus depuis le dernier recalage de la quantité de carburant injectée dans le cylindre lors de l'injection pilote est supérieur à un seuil de kilomètres prédéterminé.

12. Système selon la revendication 10 ou 11, **caractérisé en ce qu'**il comprend des moyens (112) de détermination des valeurs de la variation du régime et de la charge du fonctionnement du moteur et **en ce que** les moyens (26 ;104 ,106 ,108 ,112) de détermination des plages de fonctionnement du moteur sont adaptés pour déterminer la plage de fonctionnement associée à la transition de l'état de recalage invalide à l'état de recalage actif comme étant l'ensemble des points de fonctionnement tels que les valeurs du régime et de la charge sont comprises dans la plage prédéterminée de valeurs de régime et de charge et que les valeurs de la variation du régime et de la charge sont inférieures respectivement à des seuils d'amplitude de variation prédéterminés et que la température du liquide refroidissement est comprise dans une plage de température prédéterminée.

13. Système selon l'une quelconque des revendications 10 à 12, **caractérisé en ce que** les moyens (26 ;104 ,106 ,108 ,112) de détermination des plages de fonctionnement du moteur sont adaptés pour déterminer :
- la plage de fonctionnement associée à la transition de l'état de recalage suspendu à l'état de recalage actif comme étant l'ensemble des points de fonctionnement tels que les valeurs du régime et de la charge sont comprises dans la plage prédéterminée de valeurs de régime et de charge autour du au moins un point de recalage et que les valeurs des paramètres d'injection sont comprises dans une plage prédéterminée de valeurs des paramètres d'injection comprenant les valeurs initiales des paramètres d'injection correspondant aux valeurs des paramètres d'injection au début du recalage.
- la plage de fonctionnement associée à la transition de l'état de recalage actif à l'état de recalage suspendu comme étant l'ensemble des points de fonctionnement tels que les valeurs du régime et de la charge ne sont pas comprises dans la plage prédéterminée de valeurs de régime et de charge autour du au moins un point de recalage et/ou que les valeurs des paramètres d'injection ne sont pas comprise dans la plage prédéterminée de valeurs de paramètres d'injection.

14. Système selon l'une quelconque des revendications précédentes, **caractérisé en ce que** les moyens (29 ;110) d'acquisition de la valeur caractéristique de la durée de suspension comprennent un compteur de cycles de cylindre adapté pour compter le nombre de cycles de cylindre exécutés lorsque les moyens (22 ;60) de recalage sont dans l'état de recalage suspendu, et **en ce que** la durée de suspension des moyens de recalage correspond au nombre de cycles du cylindre exécutés lorsque les moyens de recalage sont dans l'état de recalage suspendu.

15. Système selon l'une quelconque des revendications 6 à 14, **caractérisé en ce que** les moyens (30 ;102) de diagnostic sont adaptés pour déterminer un dysfonctionnement des injecteurs des cylindres du moteur, et/ou un dysfonctionnement d'un capteur de régime adapté pour délivrer les informations relatives au régime de fonctionnement du moteur, et/ou une surchauffe du liquide refroidissement, et/ou un dysfonctionnement de moyens de commande de la pression de carburant dans les moyens d'alimentation.
